Europäisches Patentamt

European Patent Office

Office européen des brevets

(19)

(11) EP 1 251 259 A2

(12) **EUROPÄISCHE PATENTANMELDUNG**

(43) Veröffentlichungstag:
23.10.2002  Patentblatt 2002/43

(51) Int Cl.$^7$: **F02D 35/00**, F02D 41/22,
F02D 11/10

(21) Anmeldenummer: 02008100.6

(22) Anmeldetag: 11.04.2002

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **20.04.2001  DE 10119665
16.05.2001  DE 10123680**

(71) Anmelder: **SIEMENS AKTIENGESELLSCHAFT
80333 München (DE)**

(72) Erfinder: **Hadamik, Matthias
61348 Bad Homburg (DE)**

(54) **Verfahren zum Überlastschutz einer Endstufe eines Stellgliedes, insbesondere für einen
Lageregler**

(57)    Bei einem Verfahren zum Überlastschutz einer
Endstufe eines Stellgliedes, bei welchem der Überlastschutz temperaturunabhängig arbeitet, wird zunächst
der tatsächliche Lastzustand des Stellgliedes ermittelt
und aus diesem tatsächlichen Lastzustand der durch
das Stellglied fließende Strom bestimmt und anschließend der ermittelte Strom mit einem Sollstrom verglichen, wobei bei Überschreitung des Sollstromes eine
Überlastschutzmaßnahme greift.

**Beschreibung**

Die Erfindung betrifft ein Verfahren zum Überlastschutz einer Endstufe eines Stellgliedes, insbesondere für einen Lageregler.

Aus der DE 198 607 62 A1 ist ein Verfahren zum Schutz von Endstufen vor Übertemperatur bekannt. Bei diesem Verfahren wird die Temperatur mindestens einer Komponente des Steuergerätes ermittelt und Maßnahmen zur Abkühlung oder Begrenzung eines weiteren Temperaturanstieges ergriffen. Insbesondere bei lagegeregelten Systemen, wie sie in Drosselklappenstellern oder bei Antrieben für variablen Ventiltrieb verwendet werden, ist eine Temperaturmessung mit Rückschlüssen auf eine Überlastung nicht ausreichend, da der Temperaturmessung technische Grenzen gesetzt sind.

Der Erfindung liegt somit die Aufgabe zugrunde, einen Überlastschutz für die Endstufe eines Stellgliedes anzugeben, welcher temperaturunabhängig arbeitet.

Erfindungsgemäß wird die Aufgabe dadurch gelöst, daß zunächst der tatsächliche Lastzustand des Stellgliedes ermittelt und aus diesem tatsächlichen Lastzustand der durch das Stellglied fließende Strom bestimmt und anschließend der ermittelte Strom mit einem Sollstrom verglichen wird, wobei bei Überschreitung des Sollstromes eine Überlastschutzmaßnahme greift.

Die Erfindung hat den Vorteil, daß die Überlastung der Endstufe auf der Grundlage des durch das Stellglied fließenden Stromes bestimmt wird, ohne dass eine Temperaturmessung notwendig ist. Dabei wird auf eine direkte Messung des Stromes mittels eines Meßwiderstandes vollständig verzichtet Da Strommeßwiderstände mit der dazu gehörenden Auswerteelektronik, insbesondere für den Einsatz in einem Temperaturbereich bis 135 °C sehr teuer sind, führt die erfindungsgemäße Maßnahme zu einer erheblichen Kosteneinsparung.

Vorteilhafterweise wird der durch das Stellglied fließende Strom auf der Grundlage der Differenz zweier Lastzustände bestimmt. Auf Grund dieser einfachen Maßnahme wird lediglich ein an sich in jedem Steuergerät enthaltener Mikroprozessor, welcher beispielsweise einen Lageregler ansteuert, durch zusätzliche Rechenzeit beansprucht. Auf zusätzliche Hardware-Maßnahmen kann vollständig verzichtet werden, da als Eingangsgrößen für den Überlastschutz nur Größen verwendet werden, welche für die Regelung als solche notwendig sind.

In einer Ausgestaltung werden die Lastzustände in festen, wiederholbaren Meßzyklen ermittelt.

Ist das Stellglied als Motor ausgebildet, wird die Motordrehzahl zur Ermittlung des Lastzustandes herangezogen. Die Ermittlung der Motordrehzahl erfolgt dann dadurch, daß in jedem Meßzyklus eine Winkelmessung der Motorwelle erfolgt, wobei nach zwei aufeinanderfolgenden Meßzyklen die Winkeldifferenz bestimmt wird, aus welcher die Motordrehzahl ermittelt wird.

Wird die Überlastung der Endstufe festgestellt, so kann als eine Überlastschutzmaßnahme eine Notlaufmaßnahme greifen. Vorteilhafterweise wird bei dieser Notlaufmaßnahme das Tastverhältnis des Ansteuersignales der Endstufe begrenzt.

Eine andere Überlastschutzmaßnahme besteht in der Abschaltung der Endstufe.

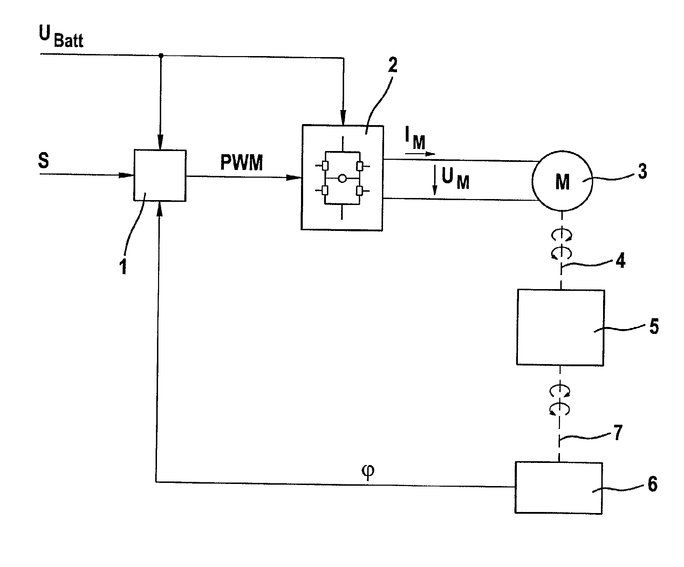

Die Erfindung läßt zahlreiche Ausführungsformen zu. Eine davon soll anhand der in der Zeichnung dargestellten Figur näher erläutert werden. Diese Figur zeigt ein lagegeregeltes System.

Ein als Mikroprozessor ausgebildetes Steuergerät 1 ist mit einer Brückenendstufe 2 verbunden, wobei das Steuergerät 1 und die Brückenendstufe 2 an Batteriespannung $U_{Batt}$ des Kraftfahrzeuges liegen. In der Diagonale des Brückenzweiges ist ein DC-Motor 3 angeordnet, dessen Motorwelle 4 über ein, eine feste Übersetzung aufweisendes Getriebe 5 verbunden ist. Das Getriebe 5 weist eine Antriebswelle 7 auf, an welcher ein Positions-Istwertgeber 6 angeordnet ist, welcher die Winkelstellung φ der Antriebswelle und somit der Motorwelle 4 mißt und an das Steuergerät 1 ausgibt. Im dem Fall, dass mit dem Motor 3 eine nicht weiter dargestellte Excenterwelle für einen variablen Ventiltrieb betätigt wird, liegt neben dem Winkel-Istwert φ an dem Steuergerät 1 ebenfalls ein Winkel-Sollwert S an, wobei in Abhängigkeit des Vergleiches zwischen Winkel-Istwert φ und Winkel-Sollwert S ein PWM-Signal zur Ansteuerung der Endstufe 2 erzeugt wird. Auf Grund dieses PWM-Signales, welches in Prozent betrachtet wird, wird der Motor 3 entweder in die eine oder in die andere Richtung betrieben, je nach dem, ob der Ventilhub vergrößert oder verkleinert werden soll. Infolge des Ansteuersignales PWM wird in der Brückenendstufe ein Motorstrom $I_M$ erzeugt, welcher eine Motorspannung $U_M$ nach sich zieht.

Um in einem solchen System eine Überlastüberwachungsfunktion zu realisieren, wird der Motorstrom ermittelt. Die Bestimmung des Motorstroms erfolgt gemäß dem erfindungsgemäßen Verfahren auf indirektem Wege. Dabei wird davon ausgegangen, daß die Batteriespannung gleich einer Nennspannung des Motors ist, und der Motorstrom $I_M$ ergibt sich aus

$$I_M = A \times (PWM - B(\varphi_n - \varphi_{n-1})).$$

Dabei ist A eine Konstante, welche von der Nennspannung des Motors, welche gleich der Batteriespannung ist, und dem Widerstand $R_M$ des Motors abhängt. Der Widerstand des Motorkreises $R_M$ faßt alle relevanten Widerstände in diesem Kreis zusammen (Klemmwiderstand des Motors, Kabelwiderstände, Innenwiderstände der Endstufe).

Auch B ist eine Konstante, die sich aus dem Übersetzungsverhältnis des Getriebes, der Nenndrehzahl des Motors, dem Abtastzyklus und der Umdrehung bestimmt.

Auf der Grundlage dieser Formel erfolgt die Bestimmung des Motorstromes $I_M$ auf folgende Art und Weise:

Auf Grund der Positionsregelung für das Ventil wird durch das Steuergerät 1 ein PWM-Signal erzeugt. Infolge des PWM-Signals wird die Motorwelle 4 und anschließend auch die Antriebswelle 7 verdreht. Während eines Ansteuerzyklus $t_N$ wird in gleichmäßigen Zeitabständen die Position φ der Antriebswelle 7 gemessen. Dabei wird aus der Position $φ_{n-1}$, welche in einem ersten Abtastzyklus $t_{N-1}$ ermittelt wurde, und aus der im darauffolgenden Abtastzyklus $t_N$ gemessenen Position $φ_n$ eine Differenz gebildet, welche vom PWM-Signal abgezogen wird, wodurch eine Größe erhalten wird, die dem Motorstrom $I_M$ entspricht. Auf Grund dieser Maßnahme reduziert sich die Bestimmung des Motorstromes allein auf den Rechenaufwand im Steuergerät 1, da auf eine Messung verzichtet wird.

Um ein starkes Rauschen des ermittelten Stromverlaufes zu unterdrücken, welches beispielsweise durch die vorhandene Ankerinduktivität bzw. die Vernachlässigung der Getriebelose verursacht wird, ist der Stromverlauf durch eine Filterung in Form eines gleitenden Durchschnittes zu dämpfen. In der Praxis ist eine Durchschnittsbildung über 8 oder 16 Stromwerte sinnvoll.

Eine solche Überwachungsfunktion ist in Stellgliedern aller Art vorstellbar. Neben der Endstufenüberwachung ist auch ein Überlastschutz von DC-Motoren bzw. ein Energiemanagement bei batteriebetriebenen Systemen möglich

**Patentansprüche**

1. Verfahren zum Überlastschutz einer Endstufe eines Stellgliedes, insbesondere für einen Lageregler, **dadurch gekennzeichnet, daß** zunächst der tatsächliche Lastzustand des Stellgliedes ermittelt wird und aus diesem tatsächlichen Lastzustand der durch das Stellglied fließende Strom bestimmt wird und anschließend der ermittelte Strom mit einem Sollstrom verglichen wird, wobei bei Überschreitung des Sollstromes eine Überlastschutzmaßnahme greift.

2. Verfahren nach Anspruch 1, **dadurch gekennzeichnet, daß** der durch das Stellglied fließende Strom aus der Differenz zweier Lastzustände bestimmt wird.

3. Verfahren nach Anspruch 2, **dadurch gekennzeichnet, daß** die Lastzustände in festen Meßzyklen ermittelt werden, wobei die Differenz der Lastzustände aus Lastzuständen gebildet wird, welche in unterschiedlichen Meßzyklen gemessen wurden.

4. Verfahren nach Anspruch 1 und 2, **dadurch gekennzeichnet, daß** das Stellglied ein Motor ist, wobei die Motordrehzahl zur Ermittlung des Lastzustandes herangezogen wird.

5. Verfahren nach Anspruch 4, **dadurch gekennzeichnet, daß** in jedem Meßzyklus der Winkel der Motorwelle erfaßt wird, wobei nach zwei aufeinanderfolgenden Meßzyklen die Winkeldifferenz und daraus die Motordrehzahl bestimmt wird.

6. Verfahren nach Anspruch 1, **dadurch gekennzeichnet, daß** als Überlastschutzmaßnahme eine Notlaufmaßnahme greift.

7. Verfahren nach Anspruch 6, **dadurch gekennzeichnet, daß** als Notlaufmaßnahme das Tastverhältnis des Ansteuersignales der Endstufe begrenzt wird.

8. Verfahren nach Anspruch 1, **dadurch gekennzeichnet, daß** als Überlastschutzmaßnahme die Endstufe abgeschaltet wird.